# EUROPEAN PATENT APPLICATION

(11) **EP 1 742 478 A1**
(43) Date of publication of application: **10.01.2007**
(21) Application number: 05300567.4
(22) Date of filing: 07.07.2005
(51) Int. Cl.: H04N 7/26

(54) **Method and apparatus for scalable chrominance encoding and decoding**

(71) Applicant: Thomson Licensing, 92100 Boulogne-Billancourt (FR)
(72) Inventor: Zhai, Jiefu, Bld. 3 Chenghua Yuan, 100083 Beijing (CN); Chen, Ying, Bld. 3, 103 Chenghua Yuan, Beijing 100083 (CN)
(74) Representative: Hartnack, Wolfgang

(57) **Abstract**

In professional video coding applications a special kind of scalability is desired: colour space scalability providing 4:2:0 → 4:2:2 → 4:4:4 scalability. From a single-version bitstream (OBS) e.g. in 4:4:4 format that supports this feature a 4:2:0 or 4:2:2 bitstream with lower chroma sampling rate can be extracted easily. Such feature avoids the need of providing several copies of same video content with different chroma subsampling rates.

## Description

The invention relates to a method and to an apparatus for generating, from original chrominance signal data in 4:2:0 and 4:2:2 and 4:4:4 format, for a video signal bitstream encoded chrominance data for the chrominance formats 4:2:0 and 4:2:2 and 4:4:4. It also relates to a method for generating, from encoded chrominance data in a video signal bitstream, chrominance signal data in 4:2:2 or 4:4:4 format.

### Background

Scalable video coding is an attractive technology for a couple of applications. Different methods for facilitating such scalability have been standardised already, including SNR (signal-to-noise ratio) scalability, spatial scalability, temporal scalability, and fine grain scalability, in the scalability profiles of the MPEG-2 and MPEG-4 video coding/decoding standards. Most of the work in scalable coding has been aimed at providing bitrate scalability, which can improve the transmission, storage and security of video content.
MPEG is currently preparing a new standard to address the scalable video coding requirements in new applications. It will be based on the ISO/IEC 14496-10 (or H.264 or AVC) standard and add some scalable extension. Spatial, temporal and SNR scalability will be defined in this standard and it could be cut down to meet the requirements of special applications, cf.:
ISO/IEC JTC1/SC29/WG11 and ITU-T SG16, "Scalable Video Coding - Working Draft 1", JVT-N020, 14th Meeting: Hong Kong, ISO/IEC JTC1/SC29/WG11 and ITU-T SG16, "Joint Scalable Video Model JSVM 0," JVT-N021, 14th Meeting: Hong Kong, January 2005.
The ISO/IEC 14496-10 standard is e.g. described in:
T. Wiegand, "Draft ITU-T Recommendation and Final Draft International Standard of Joint Video Specification (ITU-T Rec. H.264 | ISO/IEC 14496-10 AVC)", March 31, 2003.

### Invention

In professional video applications another kind of scalability is desired: colour space scalability, which aims to provide 4:2:0 → 4:2:2 → 4:4:4 scalability. From a single-version bitstream e.g. in 4:4:4 format that supports this feature a sub-bitstream with lower chroma sampling rate (for instance 4:2:0 or 4:2:2) could be extracted easily without any computation. Such feature would avoid the need of providing several copies of same video content with different chroma sub-sampling rates.
The High Profile of H.264, also known as FRExt, has introduced a new colour space called YC_{g}Cₒ for coding 4:2:2 and 4:4:4 video material, where C_{g} denotes green chroma and Cₒ denotes orange chroma. This new colour space is intended to replace the YC_{b}Cᵣ colour space and has several benefits:
- the YC_{g}Cₒ space will not introduce mismatch with forward and backward transform;
- it increases the coding efficiency.
   FRExt achieves these features by employing a residual colour transform, which intends to retain use of the RGB domain for input and output and reference pictures while bringing the above forward and inverse colour transformations inside the encoder and decoder for the processing of the residual data only. The drawback of the residual colour transform is that it can work only for 4:4:4 sampling video sequences. But currently there is no coding tool that provides colour space scalability.

A problem to be solved by the invention is to provide such coding tool. This problem is solved by the methods disclosed in claims 1 and 2. An apparatus that utilises this method is disclosed in claims 3 and 4.

According to a first embodiment, performing colour space scalability exploits the redundancy between different sampling positions of chroma components by interpolation and in-frame prediction. According to a second embodiment, motion compensation is used for the additional chroma components to form a residual. Thereafter the enhancement layer residual is predicted from the base layer chroma residual. The resulting difference only is then encoded.
An advantage of these techniques is that colour space scalability is easily achieved with little overhead thereby keeping coding efficiency. The scope of scalable video coding for professional applications is broadened.

In principle, the inventive method is suited for generating, from original chrominance signal data in 4:2:0 and 4:2:2 and optionally 4:4:4 format, for a video signal bitstream encoded chrominance data for the chrominance formats 4:2:0 and 4:2:2 and optionally 4:4:4, whereby said original chrominance signal data for the 4:2:0 format are encoded as 4:2:0 format data and are combined with said bitstream, said method including the steps:
- vertically interpolating and upsampling the chrominance components of current reconstructed picture data from said 4:2:0 format encoding;
- calculating the difference signal between said vertically interpolated and upsampled chrominance components and the corresponding original 4:2:2 format chrominance components, resulting in residual chrominance components;
- encoding said residual chrominance components and combining the resulting data with said bitstream, or including the steps:

- vertically interpolating and upsampling current residual picture data from the chrominance components of said 4:2:0 format encoding;
- calculating the difference signal between said vertically interpolated and upsampled residual chrominance components and corresponding motion compensated original 4:2:2 format residual chrominance components;
- encoding said difference signal (2IE) and combining the resulting data with said bitstream.

In principle the inventive apparatus is suited for generating, from original chrominance signal data in 4:2:0 and 4:2:2 and optionally 4:4:4 format, for a video signal bitstream encoded chrominance data for the chrominance formats 4:2:0 and 4:2:2 and optionally 4:4:4, whereby said original chrominance signal data for the 4:2:0 format are encoded as 4:2:0 format data and are combined with said bitstream, said apparatus including:
- means for vertically interpolating and upsampling the chrominance components of current reconstructed picture data from said 4:2:0 format encoding;
- means for calculating the difference signal between said vertically interpolated and upsampled chrominance components and the corresponding original 4:2:2 format chrominance components, resulting in residual chrominance components;
- means for encoding said residual chrominance components;
- means for combining the resulting data with said bitstream,
   or including:

- means for vertically interpolating and upsampling current residual picture data from the chrominance components of said 4:2:0 format encoding;
- means for calculating the difference signal between said vertically interpolated and upsampled residual chrominance components and corresponding motion compensated original 4:2:2 format residual chrominance components;
- means for encoding said difference signal;
- means for combining the resulting data with said bitstream.

In principle, the inventive method is suited for generating, from encoded chrominance data in a video signal bitstream, chrominance signal data in 4:2:2 format, whereby said 4:2:2 chrominance signal data in the 4:2:2 format were encoded as supplementary data for 4:2:0 format chrominance signal data contained in said bitstream (OBS), said method including the steps:
- decoding said 4:2:0 format chrominance signal data;
- vertically interpolating and upsampling the chrominance components of current reconstructed picture data or current motion compensated residual chrominance component data, respectively, from said 4:2:0 format decoding;
- combining said vertically interpolated and upsampled chrominance components or said residual chrominance components data, respectively, with correspondingly decoded 4:2:2 format supplementary data to form said chrominance signal data in 4:2:2 format.

Advantageous additional embodiments of the invention are disclosed in the respective dependent claims.

### Drawings

Exemplary embodiments of the invention are described with reference to the accompanying drawings, which show in:
- Fig. 1: principle of the inventive interpolation process;
- Fig. 2: inventive encoding process for the first embodiment;
- Fig. 3: inventive encoding process for the second embodiment;
- Fig. 4: pixel block encoder;
- Fig. 5: inventive decoding process;
- Fig. 6: pixel block decoder.

### Exemplary embodiments

In the following the 4:2:0 → 4:2:2 chroma scalability is described first. In principle, that description applies also to the other types of scalability. However, different considerations for 4:2:2 → 4:4:4 scalability are described separately. Two layers are considered. The base layer contains a 4:2:0 bitstream that could be a H.264/AVC standard compatible bitstream or an SNR/Spatial/Temporal scalable bitstream. The enhancement layer adds new chroma component information. No additional luma information will be present in this enhancement layer.

Two embodiments for carrying out inter-layer chroma prediction are described. The first embodiment uses in-frame chroma prediction. The chroma component of a reconstructed 4:2:0 frame is vertically interpolated and upsampled to obtain a reference signal for the chroma components of the 4:2:2 and/or 4:4:4 format frame. After the reference signal is generated, in-frame chroma prediction can be carried out by forming the difference between the 4:2:2 original chroma component and that reference signal. The residual chroma can be encoded in the same way as in ISO/IEC 14496-10:2004/FDAM1 AVC Fidelity Range Extensions (see section 8.5), except that the chroma DC components of each 4*4 block do not need further Hadamard transform (see section 8.5.7 therein).

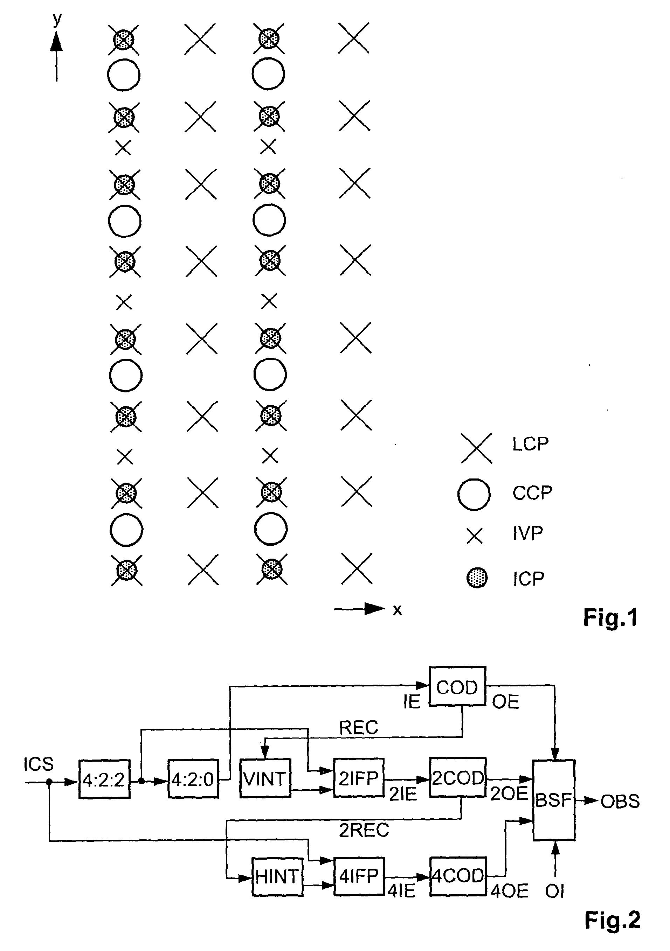

The interpolation process for 4:2:0 → 4:2:2 is illustrated in Fig. 1 for one of the two chroma components. The big crosses represent luminance component pixels LCP in the vertical-horizontal plane. The big circles represent 4:2:0 format chrominance component pixels CCP in the vertical-horizontal plane. Only vertical interpolation (i.e. in y direction) is employed to get the desired interpolated chrominance component pixels ICP (represented by small circles) for the 4:2:2 format reference signal or picture. The interpolation of the missing chrominance pixel values ICP can be accomplished in two steps: in a first step virtual chrominance pixels IVP (represented by small crosses in the drawing) can be interpolated which will not be present in the finally generated reference picture signal. This interpolation process starts from the CCP pixel values and may use a 6-tap filter [1 -5 20 20 -5 -1]/32 that is also used in the H.264/AVC luminance half-pel interpolation. In the second step, the 4:2:2 chroma pixels are interpolated from the CCP and IVP chroma pixel values by applying a 2-tap linear filter [1 1]/2 (i.e. by forming the average value).
As an alternative, the ICP pixel values can be calculated directly from the CCP values using appropriate interpolation filter coefficients.
This kind of processing is applied to both chrominance components.
For the 4:2:2 → 4:4:4 interpolation and upsampling, only horizontal interpolation (i.e. in x direction) is required. The above H.264/AVC half-pel interpolation filter can be applied without any modification.
The interpolated signal forms a new reference frame for the chroma components. Following that interpolation process, the generated reference frame can be stored into the reference frame buffer, which buffer may contain only chroma components. At encoder side, the reference frame that achieves best Rate-Distortion performance is selected and, following motion compensation, prediction and residual coding is applied. At decoder side, the decoder parses the reference frame index and then uses the corresponding reference frame to accomplish the motion compensation prediction. If the reference frame is upsampled base layer, the motion compensation process can be regarded as using zero motion. Because the chroma components are highly correlated, the generated reference frame will achieve a better Rate-Distortion performance than without employing this technique.

The other embodiment is chroma component residual prediction. As before, vertical interpolated is used. After the base layer is reconstructed, the reconstructed chroma residual signal of the base layer is upsampled with linear interpolation along vertical direction. Then the chroma residual signal of the enhancement layer can be predicted (or subtracted) from the upsampled chroma residual signal of the base layer. That means only the difference between the enhancement layer residual chroma signal and the predicted residual chroma signal needs to be coded. The residual prediction should be used macroblock-wise adaptively.
Concerning the upsampling of the residual from 4:2:0 → 4:2:2, a two-tap linear filter can be used for the interpolation of the residual along the vertical direction. Advantageously, using a simple two-tap linear filter is already a good trade-off between complexity and performance, and is therefore sufficient.
This kind of processing is applied to both chrominance components.
For the 4:2:2 → 4:4:4 residual interpolation and upsampling, only horizontal interpolation (i.e. in x direction) is required, and a two-tap linear filter can be applied along the horizontal direction.

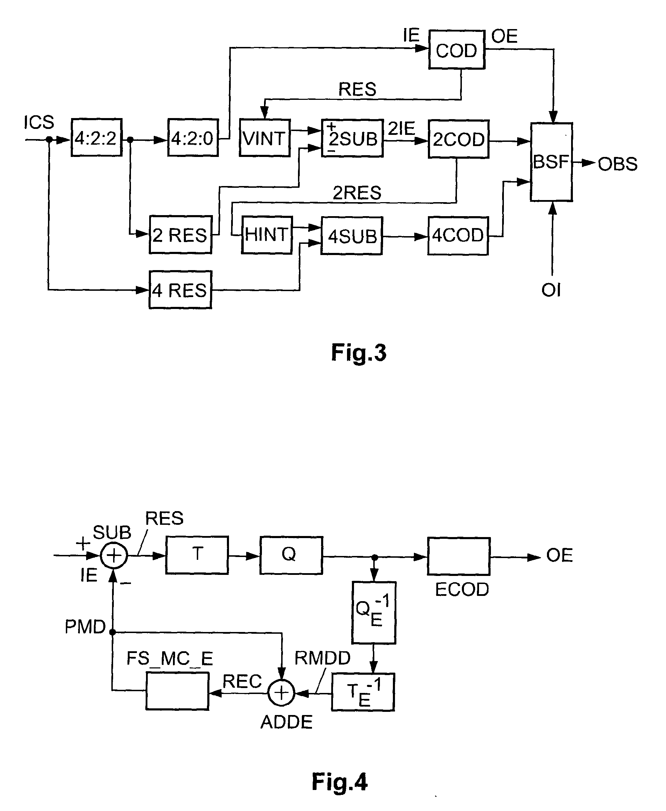

In Fig. 2 a chrominance input signal ICS in 4:4:4 format passes through a 4:2:2 converter, a 4:2:0 converter and a value block or macroblock coder COD to a bitstream formatter BSF. Reconstructed frame chrominance data REC from coder COD are fed to a vertical interpolator VINT in which they are interpolated and upsampled as described in connection with Fig. 1. In an intra-frame predictor 2IFP for the 4:2:2 format the difference between the output signals of VINT and the output signals of converter 4:2:2 is formed and passes through a value block or macroblock coder 2COD to bitstream formatter BSF.
Reconstructed frame chrominance data 2REC from coder 2COD are fed to a horizontal interpolator HINT in which they are horizontally interpolated and upsampled as described in connection with Fig. 1. In an intra-frame predictor 4IFP for the 4:4:4 format the difference between the output signals of HINT and converter 4:4:4 is formed and passes through a value block or macroblock coder 4COD to bitstream formatter BSF.
The coders COD, 2COD and 4COD may operate as described for Fig. 4. Bitstream formatter BSF receives also other information data items OI like luminance data and motion information, and provides the corresponding combined output bitstream OBS.
This kind of processing is applied to both chrominance components.

In Fig. 3 a chrominance input signal ICS in 4:4:4 format passes through a 4:2:2 converter, a 4:2:0 converter and a value block or macroblock coder COD to a bitstream formatter BSF. A vertical interpolator VINT receives from coder COD, following prediction, a reconstructed base layer residual chroma signal RES and interpolates and upsamples it vertically to form a predicted 4:2:2 residual signal. In a first subtractor 2SUB the difference between the 'original' motion compensated 4:2:2 format residual calculated in stage 2RES and the output signal of VINT is formed and passes through a value block or macroblock coder 2COD to bitstream formatter BSF. The 'original' 4:2:2 format residual was generated in a 4:2:2 residual calculator 2RES using motion compensation. The 'residual' is the prediction error signal resulting after the motion compensation.

A horizontal interpolator HINT receives from coder 2COD, following prediction, a reconstructed 4:2:2 enhancement layer residual chroma signal 2RES and interpolates and upsamples it horizontally to form a predicted 4:4:4 residual signal. In a second subtractor 4SUB the difference between the 'original' 4:4:4 format residual and the output signal of HINT is formed and passes through a value block or macroblock coder 4COD to bitstream formatter BSF. The 'original' 4:4:4 format residual was generated in a 4:4:4 residual calculator 4RES using motion compensation (cf. above for 2RES).
The coders COD, 2COD and 4COD may operate as described for Fig. 4, and provide the required residual signals. Bitstream formatter BSF receives also other information data items OI like luminance data and motion information, and provides the corresponding combined output bitstream OBS.
This kind of processing is applied to both chrominance components.

The video data input signal IE of the chroma block encoder in Fig. 4 contains macroblock data for encoding. In the case of intraframe video data, a subtractor SUB simply allows these to pass. They are processed in transform means T and quantising means Q and are fed to an entropy encoder ECOD, which outputs the encoder chroma data output signal OE. ECOD can, for example, carry out Huffman coding for the coefficients and add header information and motion vector data.
In the case of interframe video data, predicted block or macroblock data PMD are subtracted from the input signal IE in the subtractor SUB and the difference chroma data are fed to the entropy encoder ECOD via the transform means T and the quantising means Q. The output signal of Q is also processed in inverse quantising means Q_{E}⁻¹, the output signal of which is fed via inverse transform means T_{E}⁻¹ to the combiner ADDE in the form of reconstructed block or macroblock difference data RMDD. The output signal of ADDE is buffer-stored in a frame store in motion estimation and compensation means FS_MC_E, which carry out motion compensation for reconstructed block or macroblock data and output block or macroblock data PMD predicted in this way to the subtracting input of SUB and to the other input of the combiner ADDE. The quantising means Q and the inverse quantising means Q_{E}⁻¹ can be controlled by the occupancy level of the encoder buffer ENCB.
This kind of processing is applied to both chrominance components. The output signal of ADDE is output by the encoder COD as reconstructed frame data REC. The output signal of SUB is output by the encoder COD as residual frame data RES.

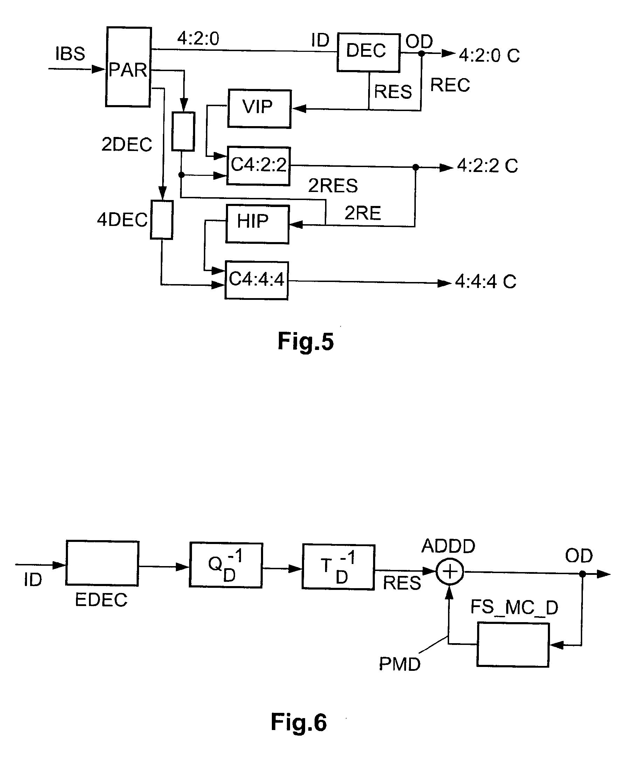

In Fig. 5 an input bitstream IBS (corresponding to output bitstream OBS) is fed to a parser PAR that provides encoded 4:2:0 base layer chrominance data and encoded 4:2:2 and 4:4:4 enhancement layer chrominance data. The 4:2:0 format output passes through a 4:2:0 decoder DEC that may operate as described in connection with Fig. 6 and that outputs decoded 4:2:0 chroma data 4:2:0C.
The encoded 4:2:2 enhancement layer data from parser PAR pass through a first enhancement layer data decoder 2DEC to a combiner C4:2:2, which receives also chrominance data (i.e. from the reconstructed final output signal REC or 4:2:0C according to the first embodiment, or a motion compensated residual signal RES according to the second embodiment) that are vertically interpolated from an output signal of decoder DEC in a vertical interpolator VIP, and which combiner outputs the combined decoded 4:2:2 chrominance data 4:2:2C.
The encoded 4:4:4 enhancement layer data from parser PAR pass through a second enhancement layer data decoder 4DEC to a combiner C4:4:4, which receives also data that are horizontally interpolated in a horizontal interpolator HIP from the output signal 4:2:2C or 2REC in the first embodiment, or from a residual signal 2RES from decoder 2DEC in the second embodiment, and which combiner C4:4:4 outputs the combined decoded 4:4:4 chroma data 4:4:4C.
This kind of processing is applied to both chrominance components.
The decoding processing according to Fig. 5 reverses the encoding processing according to Fig. 2 or 3.

In Fig. 6, the chroma data input signal ID is fed via entropy decoder means EDEC, inverse quantising means Q_{D}⁻¹ and inverse transform means T_{D}⁻¹ to a combiner ADDD, which outputs the chroma data output signal OD. EDEC can, for example, carry out Huffman decoding for the coefficients and decode and/or evaluate header information and motion vector data.
Q_{E}⁻¹, Q_{D}⁻¹, T_{E}⁻¹, T_{D}⁻¹ and EDEC have a function which is the corresponding inverse of the function of Q, T and ECOD. The output signal of ADDD is buffer-stored in a frame store in motion compensation means FS_MC_D. FS_MC_D effects a motion compensation for reconstructed block or macroblock data. The block or macroblock data PMD predicted in FS_MC_D are passed to the second input of the combiner ADDE only in the case of interframe-decoded block or macroblock data. In the case of intraframe-decoded block or macroblock data, the combiner ADDD simply passes on the output signal from T_{D}⁻¹.
The transform and the inverse transform in figures 4 and 6 can be a DCT or inverse DCT, respectively.
This kind of processing is applied to both chrominance components. The output signal of stage T_{D}⁻¹ is output by the decoder DEC as residual frame data RES.

## Claims

1. Method of generating, from original chrominance signal data in 4:2:0 and 4:2:2 and optionally 4:4:4 format, for a video signal bitstream (OBS) encoded chrominance data for the chrominance formats 4:2:0 and 4:2:2 and optionally 4:4:4, whereby said original chrominance signal data for the 4:2:0 format are encoded (COD) as 4:2:0 format data and are combined (BSF) with said bitstream (OBS), **characterised by** the steps:
- vertically interpolating and upsampling (IVP, ICP, VINT) the chrominance components of current reconstructed picture data (REC) from said 4:2:0 format encoding (COD);
- calculating (2IFP) the difference signal between said vertically interpolated and upsampled chrominance components and the corresponding original 4:2:2 format chrominance components, resulting in residual chrominance components (2IE);
- encoding (2COD) said residual chrominance components (2IE) and combining (BSF) the resulting data with said bitstream.

2. Method of generating, from original chrominance signal data in 4:2:0 and 4:2:2 and optionally 4:4:4 format, for a video signal bitstream (OBS) encoded chrominance data for the chrominance formats 4:2:0 and 4:2:2 and optionally 4:4:4, whereby said original chrominance signal data for the 4:2:0 format are encoded (COD) as 4:2:0 format data and are combined (BSF) with said bitstream (OBS), **characterised by** the steps:
- vertically interpolating and upsampling (IVP, ICP, VINT) current residual picture data (RES) from the chrominance components of said 4:2:0 format encoding (COD);
- calculating (2SUB) the difference signal (2IE) between said vertically interpolated and upsampled residual chrominance components and corresponding motion compensated original 4:2:2 format residual chrominance components;
- encoding (2COD) said difference signal (2IE) and combining (BSF) the resulting data with said bitstream.

3. Apparatus for generating, from original chrominance signal data in 4:2:0 and 4:2:2 and optionally 4:4:4 format, for a video signal bitstream (OBS) encoded chrominance data for the chrominance formats 4:2:0 and 4:2:2 and optionally 4:4:4, whereby said original chrominance signal data for the 4:2:0 format are encoded (COD) as 4:2:0 format data and are combined (BSF) with said bitstream (OBS), said apparatus including:
- means (VINT) for vertically interpolating and upsampling (IVP, ICP) the chrominance components of current reconstructed (COD) picture data (REC) from said 4:2:0 format encoding;
- means (2IFP) for calculating the difference signal between said vertically interpolated and upsampled chrominance components and the corresponding original 4:2:2 format chrominance components, resulting in residual chrominance components (2IE);
- means (2COD) for encoding said residual chrominance components (2IE);
- means (BSF) for combining the resulting data with said bitstream.

4. Apparatus for generating, from original chrominance signal data in 4:2:0 and 4:2:2 and optionally 4:4:4 format, for a video signal bitstream (OBS) encoded chrominance data for the chrominance formats 4:2:0 and 4:2:2 and optionally 4:4:4, whereby said original chrominance signal data for the 4:2:0 format are encoded (COD) as 4:2:0 format data and are combined (BSF) with said bitstream (OBS), said apparatus including:
- means (VINT) for vertically interpolating and upsampling current residual picture data (RES) from the chrominance components of said 4:2:0 format encoding (COD);
- means (2SUB) for calculating the difference signal (2IE) between said vertically interpolated and upsampled residual chrominance components and corresponding motion compensated original 4:2:2 format residual chrominance components;
- means (2COD) for encoding said difference signal (2IE);
- means (BSF) for combining the resulting data with said bitstream.

5. Method according to claim 1 or 2, or apparatus according to claim 3 or 4, wherein the encoded chrominance data for the chrominance format 4:4:4 are generated by encoding (4COD) corresponding difference data derived from data that are horizontally interpolated and upsampled from the vertically interpolated and upsampled data.

6. Method according to one of claims 1, 2 or 5, or apparatus according to one of claims 3 to 5, wherein said interpolating and upsampling, calculating or encoding are carried out sequentially or in parallel for said chrominance components.

7. Method according to one of claims 1, 2, 5 or 6, or apparatus according to one of claims 3 to 6, wherein said encoding is a ISO/IEC 14496-10:2004/FDAM1 AVC Fidelity Range Extensions encoding, whereby optionally the chrominance DC components of each 4*4 block are not Hadamard transformed.

8. A bit stream that is encoded using the method of one of claims 1, 2 and 5 to 7.

9. A storage medium that carries a bit stream that is encoded using the method of one of claims 1, 2 and 5 to 7.

10. Method of generating, from encoded chrominance data in a video signal bitstream (IBS), chrominance signal data in 4:2:2 format (4:2:2C), whereby said 4:2:2 chrominance signal data in the 4:2:2 format were encoded as supplementary data for 4:2:0 format chrominance signal data contained in said bitstream (OBS), **characterised by** the steps:
- decoding (DEC) said 4:2:0 format chrominance signal data;
- vertically interpolating and upsampling (VIP) the chrominance components of current reconstructed picture data (REC) or current motion compensated residual chrominance component data (RES), respectively, from said 4:2:0 format decoding;
- combining (C4:2:2) said vertically interpolated and upsampled chrominance components or said residual chrominance components data, respectively, with correspondingly decoded (2ELD) 4:2:2 format supplementary data to form said chrominance signal data in 4:2:2 format (4:2:2C).

11. Method according to claim 10, including the additional steps:
- horizontally interpolating and upsampling (HIP) the chrominance components of said chrominance signal data in 4:2:2 format (4:2:2C), or current residual chrominance component data (2RES) from said 4:2:2 format decoding (2DEC), respectively;
- combining (C4:2:2) said vertically interpolated and upsampled chrominance components or said residual chrominance components data, respectively, with correspondingly decoded (4ELD) 4:4:4 format supplementary data to form said chrominance signal data in 4:4:4 format (4:4:4C).
